# EUROPÄISCHE PATENTSCHRIFT

(11) **EP 1 943 474 B1**
(45) Veröffentlichungstag und Bekanntmachung des Hinweises auf die Patenterteilung: **15.07.2009**
(21) Anmeldenummer: 07725402.7
(22) Anmeldetag: 21.05.2007
(51) Int. Cl.: F27B 7/20, C04B 7/43, F16K 1/16

(54) **ANLAGE ZUR HERSTELLUNG VON ZEMENTKLINKER**
SYSTEM FOR PRODUCING CEMENT CLINKERS
DISPOSITIF DE FABRICATION DE CLINKER DE CIMENT

(30) Priorität: 22.05.2006 DE 102006023980
(43) Veröffentlichungstag der Anmeldung: 16.07.2008
(73) Patentinhaber: Polysius AG, 59269 Beckum (DE)
(72) Erfinder: KLEGRAF, Tobias, 59602 Rüthen (DE); MOHR, Markus, CH-8610 Uster (CH); OSBURG, Ralf, 59269 Beckum (DE)
(74) Vertreter: Tetzner, Michael
(86) Internationale Anmeldenummer: PCT/EP2007/004495
(87) Internationale Veröffentlichungsnummer: WO 2007/134824

(56) Entgegenhaltungen:
- EP-B1- 0 003 123
- US-A- 3 975 148

## Beschreibung

Die Erfindung betrifft eine Anlage zur Herstellung von Zementklinker aus Rohmehl mit einem Vorwärmer zum Vorwärmen des Zementrohmehls, einer Calciniereinrichtung zum Vorcalcinieren des vorgewärmten Rohmehls, einem Sinterbrennofen zum Fertigbrennen des vorcalcinierten Zementrohmehls zu Zementklinker und einem Kühler zum Kühlen des gebrannten Zementklinkers.

Die Calciniereinrichtung wird zum einen von den Abgasen des Sinterbrennofens durchströmt und erhält zum anderen Tertiärluft über eine zwischen dem Kühler und der Calciniereinrichtung vorgesehenen Tertiärluftleitung. Da diese beiden Gasströme in ihrer Temperatur und vor allem in ihrem Sauerstoffgehalt sehr unterschiedlich sind, ist es bekannt, einen Schieber in der Tertiärluftleitung vorzusehen, um die Verteilung zwischen Abgas und Tertiärluft einstellen zu können. Die Calciniereinrichtung weist zudem in ihrem Anfangsbereich eine Calcinatordüse auf, die meist durch eine Einschnürung in der Steigleitung gebildet wird. Die dabei gewählte Querschnittsfläche der Calcinatordüse bildet einen Kompromiss zu den im Anfahr-, Teillast und Nennbetrieb zu erwartenden Strömungsverhältnissen. Die Feinjustierung der Gasverteilung wird im Betrieb der Anlage allein über den Tertiärluftschieber realisiert. Weicht der Betrieb der Anlage stark vom Auslegungspunkt ab, besteht die Gefahr, dass eine Regelung der Gasverteilung über die Bewegung des Tertiärluftschiebers nicht mehr möglich ist. Dies resultiert zumeist aus Ablagerungen von Klinkerstaub in der Tertiärluftleitung durch längerfristigen Teillastbetrieb. Andererseits ist beim Einsatz von stückigen Brennstoffen eine Erhöhung der Gasgeschwindigkeit in der Calcinatordüse wünschenswert.

Um Einfluss auf den Düsenquerschnitt zu nehmen, ist es heut Stand der Technik, den Düsenquerschnitt während eines Stillstands der Ofenanlage durch Hinzufügen oder Ausbrechen der Feuerfestauskleidung zu variieren.

Eine weitere Möglichkeit der Querschnittsverkleinerung in der Düse stellt das Einschieben von feuerfest ausgekleideter Hohlprofile im Düsenbereich dar. Für die Düsenverstellung ist bei dieser Vorgehensweise zwar keine Begehung des Calcinators notwendig, aber ein Anlagenstillstand ist auch hier erforderlich. Aus der US-A-3,975,148 sind im Bereich der Düse verschiebare Wandplatten zur Einstellung der Düse bekannt.

In der EP-B-0 003 123 wird eine Vorrichtung zum Verbrennen von karbonatischen Rohstoffen beschrieben, bei der im unteren Teil eines Schwebegasvorwärmers verstellbare Leitschaufeln zur Erzeugung eines Dralls der Ofenabgase vorgesehen sind. Im Schwebegasvorwärmer bildet sich aufgrund des Dralls eine Wirbelsenke, in welcher das Rohmehl nach unten gesaugt wird. Dadurch kommt es zu einer gründlichen Durchmischung des Rohmehls mit dem Brennstoff.

Die EP-A-1 167 314 offenbart eine Anlage zur Herstellung von Zementklinker bei der in den Drehrohrofenabgaskanal eine Tertiärluftleitung einmündet, wobei vor der Einmündung ein schwenkbare Drosselklappe vorgesehen ist.

Eine weitere aus der Praxis bekannte Anordnung sieht mehrere im Bereich der Düse installierte Flachschieber vor. Sie bestehen aus einem feuerfesten Material und können horizontal verschoben werden, wodurch die Calcinatordüse gezielt eingestellt werden kann. Bei dieser Ausführungsform ist eine relativ aufwendige Abdichtung erforderlich, die nur eine manuelle Betätigung der Flachschieber erlaubt.

Der Erfindung liegt daher die Aufgabe zugrunde, die Mittel zur Einstellung des Querschnitts der Calcinatordüse dahingehend weiterzuentwickeln, dass eine Verstellung der Düse während des Betriebs der Anlage auf einfache Art und Weise möglich ist.

Erfindungsgemäß wird diese Aufgabe durch die Merkmale des Anspruches 1 gelöst.

Die erfindungsgemäße Anlage zur Herstellung von Zementklinker aus Zementrohmehl besteht im Wesentlichen aus einem Vorwärmer zum Vorwärmen des Zementrohmehls, einer Calciniereinrichtung zum Vorcalcinieren des vorgewärmten Zementrohmehls, einem Sinterbrennofen zum Fertigbrennen des vorcalcinierten Zementrohmehls zu Zementklinker und einem Kühler zum Kühlen des gebrannten Zementklinkers. Zwischen dem Kühler und der Calciniereinrichtung ist ferner eine Tertiärluftleitung vorgesehen, über welche der Calciniereinrichtung Tertiärluft zugeführt wird. Die Calciniereinrichtung wird außerdem von den Abgasen des Sinterbrennofens durchströmt und weist in ihrem Anfangsbereich eine Calcinatordüse auf. Weiterhin sind Mittel zur Einstellung des Querschnitts der Calcinatordüse vorgesehen, die durch wenigstens ein Element gebildet werden, das zur Einstellung des Querschnitts drehbar bzw. schwenkbar angeordnet und den Abgasen des Sinterbrennofens ausgesetzt ist, wobei dass wenigstens eine Element zur Einstellung des Querschnitts im Bereich einer Ausbuchtung des Calcinators angeordnet ist und das Element zur Vergrößerung der Calcinatordüse zumindest teilweise in die Ausbuchtung dreh- bzw. schwenkbar ist.

Ein drehbar bzw. schwenkbar angeordnetes Mittel zur Einstellung des Querschnitts der Calcinatordüse ist gegenüber einem horizontal verschiebbaren Flachschieber wesentlich einfacher und zuverlässiger abzudichten sowie unempfindlicher gegenüber Ansatz. Außerdem lässt sich die Verstellung des Elements während des Betriebs der Calciniereinrichtung auf einfache Art und Weise, insbesondere automatisiert, realisieren.

Weitere Ausgestaltungen der Erfindung sind Gegenstand der Unteransprüche.

Gemäß einer bevorzugten Ausgestaltung der Erfindung sind zwei gegenüberliegend angeordnete Elemente zur Einstellung des Querschnitts vorgesehen. Außerdem ist das wenigstens eine Element zur Einstellung des Querschnitts derart ausgebildet und angeordnet, dass es von außen während des Betriebs der Calciniereinrichtung betätigbar ist.

Weiterhin ist das wenigstens eine Element zur Einstellung des Querschnitts vorzugsweise beidseitig gelagert.

In einer weiteren Ausgestaltung sind Mittel zur Kühlung des wenigstens einen Elements zur Einstellung des Querschnitts vorgesehen.

Das Element zur Einstellung des Querschnitts wird in einem Ausführungsbeispiel durch ein Pendel gebildet, dass derart schwenkbar ist, dass es eine Veränderung des Querschnitts der Calcinatordüse bewirkt. In einem anderen Ausführungsbeispiel wird das Element durch einen Zylinderausschnitt oder Zylinderabschnitt gebildet. Weiterhin ist denkbar, dass das Element aus einer segmentartigen Scheibe besteht.

Das Element muss aber nicht notwendigerweise rotationssymmetrisch ausgeführt sein.

Die Elemente zur Einstellung des Querschnitts sind vorzugsweise wärme- und verschleißgeschützt. Dabei können auch Mittel zum Schutz gegen chemischen Angriff vorgesehen werden. Der Antrieb der beweglichen Elemente zur Veränderung des Querschnitts kann beispielsweise über seine Dreh- bzw. Schwenkachse oder über seinen Umfang erfolgen.

Weitere Vorteile und Ausgestaltungen der Erfindung werden im Folgenden anhand der Beschreibung einiger Ausführungsbeispiele und der Zeichnung näher erläutert.

In der Zeichnung zeigen
- Fig. 1: eine schematische Ansicht einer Anlage zur Herstellung von Zementklinker,
- Fig. 2a: eine dreidimensionale Darstellung eines als Zylindersegment ausgebildeten Elements zur Einstellung des Querschnitts der Calcinatordüse,
- Fig. 2b: eine Schnittdarstellung des Elements gemäß Fig. 2a,
- Fig. 2c: eine dreidimensionale Darstellung eines als Zylinderausschnitt bzw. Zylinderabschnitt ausgebildeten Elements zur Einstellung des Querschnitts der Calcinatordüse gemäß einem weiteren Ausführungsbeispiel,
- Fig. 2d-2f: schematische Darstellungen der Mittel zur Einstellung des Querschnitts der Calcinatordüse in verschiedenen Stellungen,
- Fig. 3a+3b: eine zweidimensionale Darstellung sowie eine Draufsicht eines als Pendel ausgebildeten Elements zur Einstellung des Querschnitts der Calcinatordüse,
- Fig. 4a+4b: verschiedene Ansichten eines als segmentartige Scheibe ausgebildeten Elements zur Einstellung des Querschnitts der Calcinatordüse,
- Fig. 5a: eine dreidimensionale Darstellung des Elements zur Einstellung des Querschnitts der Calcinatordüse im Bereich der Anbindung an das Gehäuse der Calciniereinrichtung,
- Fig. 5b: eine geschnittene Detailansicht im Bereich der Abdichtung,

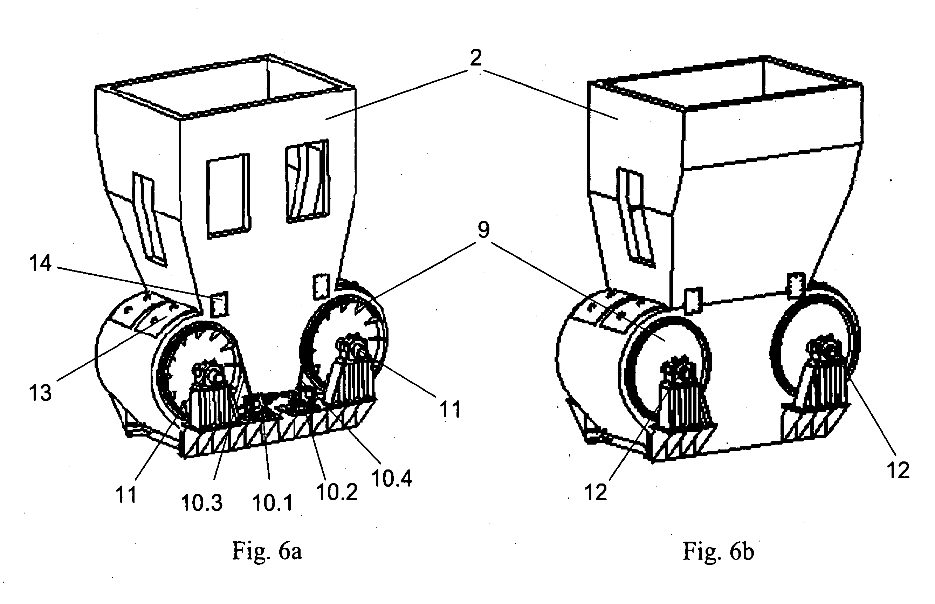

- Fig. 6a+6b: dreidimensionale Vorder- bzw. Rückansichten der Calciniereinrichtung im Bereich der Calcinatordüse und
- Fig. 7: eine geschnittene dreidimensionale Ansicht eines Elements zur Einstellung des Querschnitts der Calcinatordüse, aus der die Mittel zur Kühlung des Elements als ein Ausführungsbeispiel ersichtlich sind.
- Fig. 8a-8c: eine schematische Draufsicht einer Anlage zur Herstellung von Zementklinker mit unterschiedlichen Anordnungen der Elemente zur Einstellung des Querschnitts der Calcinatordüse relativ zur Ofenachse

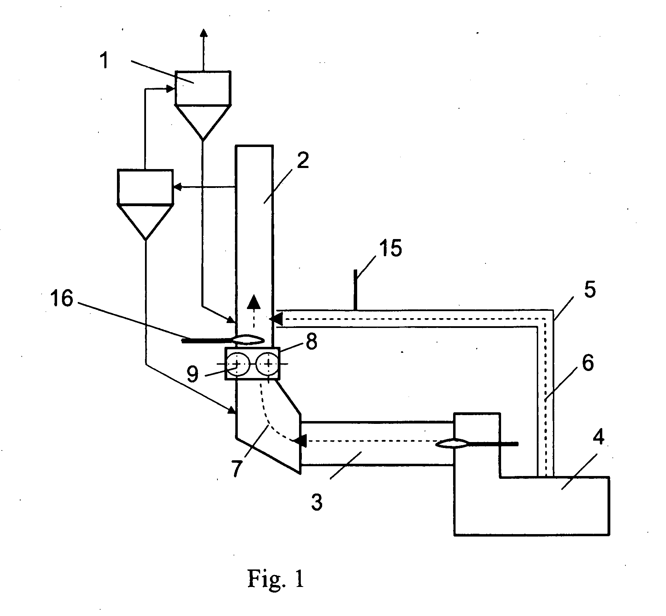

Die im Fig. 1 dargestellte Anlage zur Herstellung von Zementklinker aus Zementrohmehl besteht im Wesentlichen aus einem Vorwärmer 1 zum Vorwärmen des Zementrohmehls, einer Calciniereinrichtung 2 zum Vorcalcinieren des vorgewärmten Zementrohmehls, einem Sinterbrennofen 3 zum Fertigbrennen des vorcalcinierten Zementrohmehls zu Zementklinker und einem Kühler 4 zum Kühlen des gebrannten Zementklinkers.

Weiterhin ist zwischen dem Kühler 4 und der Calciniereinrichtung 2 eine Tertiärluftleitung 5 vorgesehen, um der Calciniereinrichtung Tertiärluft 6 zuführen zu können.

Die Calciniereinrichtung 2 wird zudem von Abgasen 7 des Sinterbrennofens 3 durchströmt. In ihrem Anfangsbereich weist die Calciniereinrichtung eine Calcinatordüse 8 auf. Um die Gasverteilung zwischen Ofenabgas 7 und Tertiärluft 6 einstellen zu können, ist zum einen in der Tertiärluftleitung 5 ein Schieber oder anderes Einstellmittel 15 vorgesehen und zum anderen sind im Bereich der Calcinatordüse 8 Mittel zur Einstellung des Querschnitts der Calcinatordüse angeordnet. Diese Mittel zur Einstellung des Querschnitts der Calcinatordüse werden durch wenigstens ein Element 9 gebildet, dass zur Einstellung des Querschnitts drehbar bzw. schwenkbar angeordnet und den Abgasen 7 des Sinterbrennofens 3 ausgesetzt ist.

Im Folgenden werden nun verschiedene Ausführungsbeispiele für das Element 9 zur Einstellung des Querschnitts der Calcinatordüse näher beschrieben.

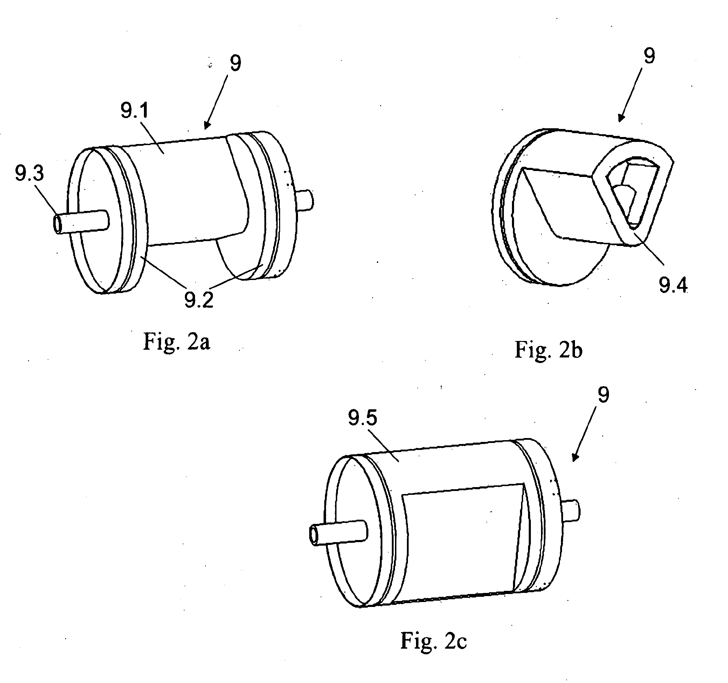

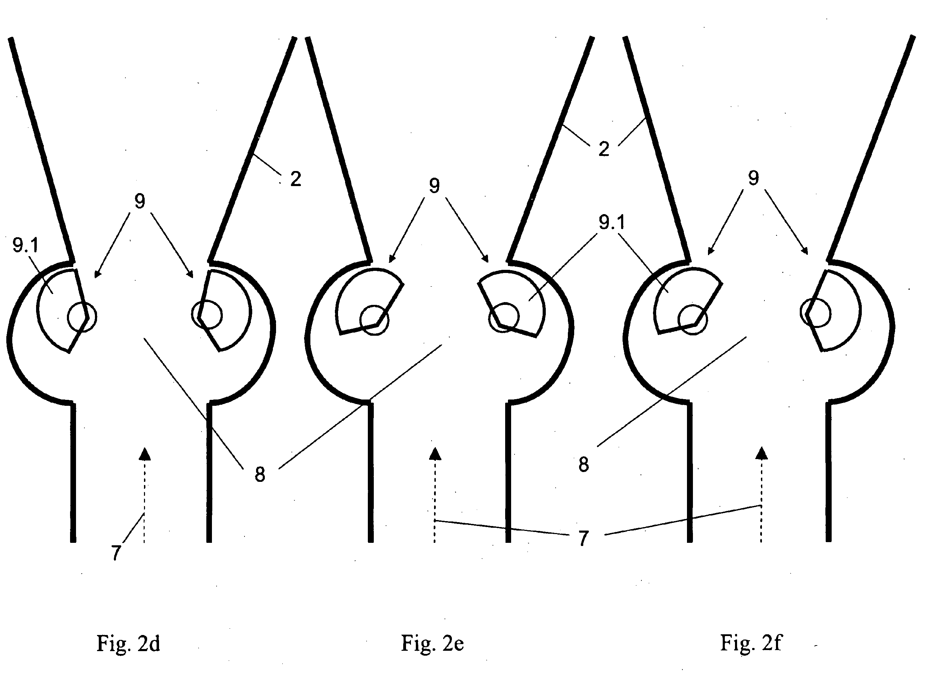

Das in Fig. 2a dargestellt Element 9 zur Einstellung des Querschnitts der Calcinatordüse wird durch einen Zylinderausschnitt bzw. Zylinderabschnitt, insbesondere ein Zylindersegment 9.1 gebildet. Dieses Zylindersegment, welches insbesondere einen Winkel im Bereich von 90°-180° aufweisen kann, ist an beiden Stirnseiten durch jeweils eine zylindrische Stirnplatte 9.2 abgeschlossen. Das Element 9 ist über eine Welle bzw. zwei Wellenzapfen 9.3 im Bereich der Calcinatordüse derart gelagert, dass das Element 9 eine Drehbewegung ausführen kann. Aus den Fig. 2d-2f sind verschiedene Einstellmöglichkeiten für das Element 9 im Bereich der Calcinatordüse 8 dargestellt.

Im dargestellten Ausführungsbeispiel sind zwei gegenüberliegend angeordnete Elemente 9 zur Einstellung des Querschnitts vorgesehen. Im Rahmen der Erfindung ist es aber selbstverständlich auch möglich, lediglich ein Element bzw. mehr als zwei Elemente vorzusehen.

In Fig. 2d sind die beiden Elemente 9 so eingestellt, dass sich der größtmögliche Querschnitt für die Calcinatordüse 8 ergibt. In Fig. 2e wird der Querschnitt durch beide Elemente 9 reduziert, während in Fig. 2f eine einseitige Querschnittsreduzierung dargestellt ist. Durch einseitiges Betätigen der Elemente 9 kann neben einer Veränderung des Querschnitts eine Ablenkung des Abgasstromes 7 bewirkt werden. Dadurch erhält die Calciniereinrichtung einen zusätzlichen Freiheitsgrad in der Strömungsführung der Abgase, um für bessere Mischverhältnisse im Bereich des Calcinatorbrenners 16 zu sorgen.

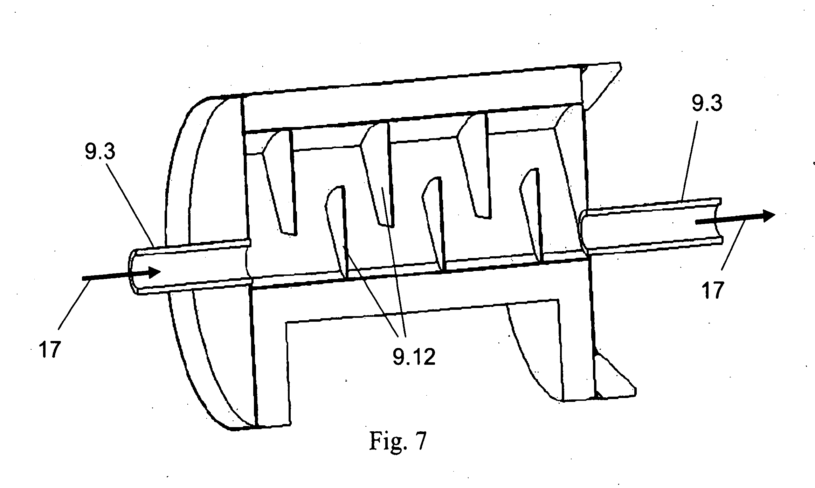

Wie insbesondere aus Fig. 2b ersichtlich wird, ist das Element 9 vorzugsweise als Hohlkörper ausgebildet, der mit einer feuerfesten Ummantelung 9.4 ausgestattet ist, damit das Element den über 1000°C heißen Abgasen 7 Stand hält. Die Ausbildung als Hohlkörper bietet darüber hinaus die Möglichkeit einer Kühlung, wie später noch anhand der Fig. 7 näher erläutert wird.

Während das Element 9 gemäß den Fig. 2a und 2b als Zylindersegment 9.1 ausgebildet ist, besteht natürlich auch die Möglichkeit einen anders ausgebildeten Zylinderausschnitt oder Zylinderabschnitt 9.5 vorzusehen, wie er beispielhaft in Fig. 2c dargestellt ist. Prinzipiell kommt es bei dem Element 9 im Wesentlichen nur darauf an, dass es so ausgestaltet ist, dass es bei einer Dreh- bzw. Schwenkbewegung eine Veränderung des Querschnitts der Calcinatordüse bewirken kann.

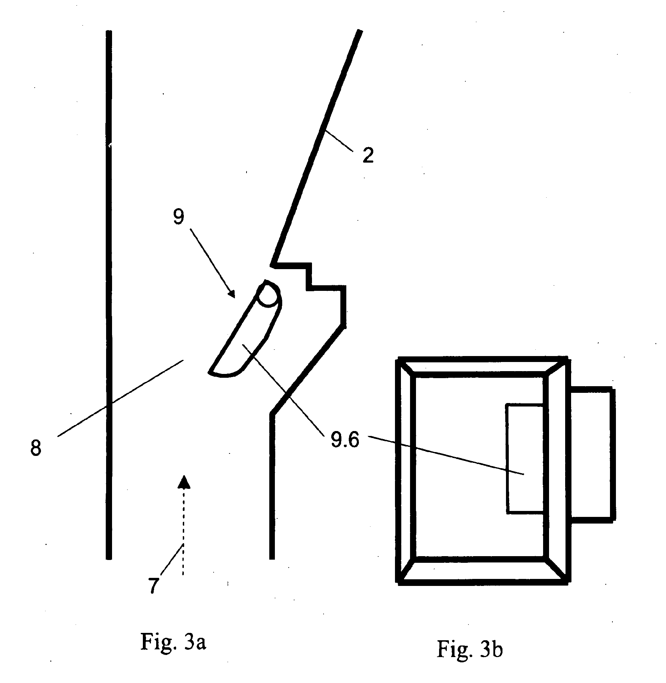

Im Ausführungsbeispiel gemäß den Fig. 3a und 3b ist das Element 9 zur Einstellung des Querschnitts der Calcinatordüse als Pendel 9.6 ausgebildet, dass derart schwenkbar ist, dass es eine Veränderung des Querschnitts der Calcinatordüse bewirkt.

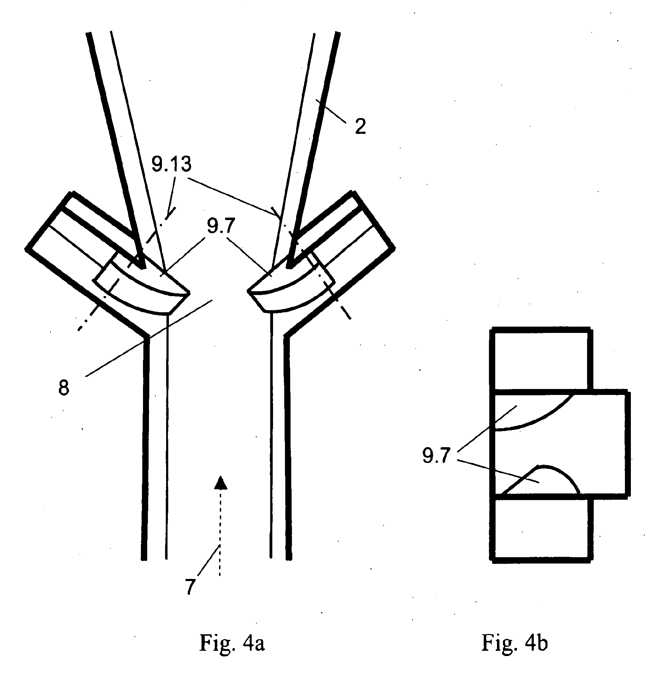

In den Fig. 4a-4b ist ein Ausführungsbeispiel darstellt, bei dem die Elemente 9 zur Einstellung des Querschnitts der Calcinatordüse durch segmentartige Scheiben 9.7 gebildet werden, die zur Veränderung des Querschnitts der Calcinatordüse 8 drehbar gelagert sind. Der Winkel zwischen der Drehachse 9.13 und der Strömungsrichtung der Abgase 7 liegt vorzugsweise im Bereich zwischen 0 und 60°.

Das Element 9 wird am Gehäuse des Calcinators 2 gelagert, wobei Dichtungen zur Anwendung kommen, die entweder direkt an der Welle bzw. den Wellenzapfen 9.3 oder im Bereich des Umfangs, insbesondere im Bereich der Stirnplatten 9.2, des Elements 9 angeordnet sind.

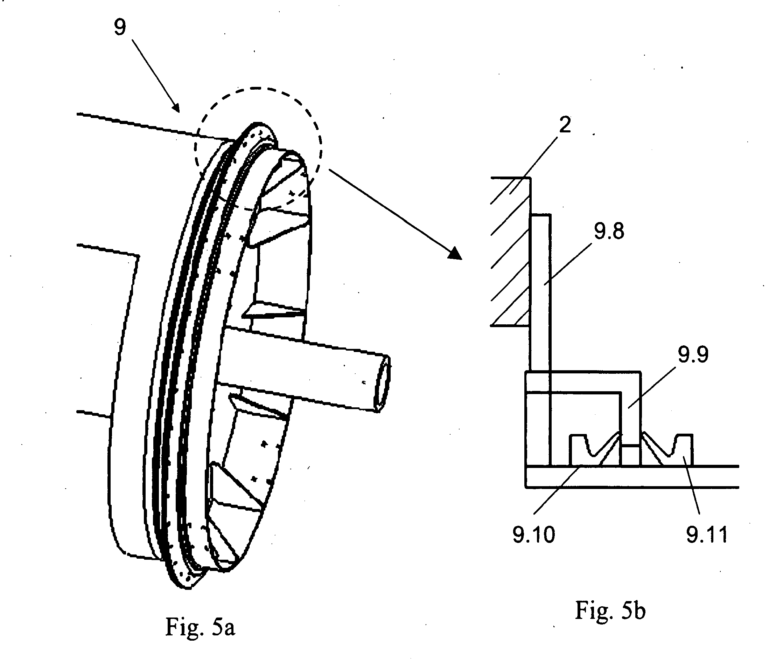

Fig. 5a zeigt einen Abschnitt des Elements 9 im Bereich der Anbindung an das Gehäuse des Calcinators 2. In Fig. 5b ist ein Detail dieser Anbindung näher dargestellt. Das Element 9 weist dabei insbesondere einen Flansch 9.8 auf, der mit seinem einen Ende fest mit dem Gehäuse 2 verbunden ist. Das andere Ende des Flansches ist als Gegenlauffläche 9.9 für den drehbaren Teil des Elements 9 ausgebildet. Die Abdichtung erfolgt hier durch eine innenliegende und eine außenliegende Dichtung 9.10, 9.11. Die beiden Dichtungen drehen dabei mit dem drehbaren Teil des Elements 9 und sind beispielsweise als V-Ringe ausgebildet.

Selbstverständlich sind im Rahmen der Erfindung auch andere Abdichtungen denkbar.

Das Element 9 zur Einstellung des Querschnitts ist vorzugsweise beidseitig gelagert, wobei es zweckmäßigerweise im Bereich seiner Welle bzw. seiner Wellenzapfen 9.3 in zwei außerhalb der Calciniereinrichtung 2 angeordneten Lagern gehaltert wird.

Der Antrieb des Elements 9 erfolgt zweckmäßigerweise auf der Außenseite der Calciniereinrichtung und kann je nach Ausgestaltung des Elements 9 über dessen Welle bzw. Wellenzapfen 9.3 oder über dessen Umfang erfolgen, wobei geeignete Mittel 10 zum Antreiben des Elements 9 vorzusehen sind.

Im dargestellten Ausführungsbeispiel ist jedem Element 9 ein Antriebsmotor 10.1 und 10.2 zugeordnet, die jeweils über einen Antriebstrang 10.3, 10.4 mit dem Umfang des durch das Gehäuse der Calciniereinrichtung 2 herausgeführten, drehbaren Elements 9 verbunden sind. Zu diesem Zweck sind am Umfang des Elements 9 geeignete Mitnehmer für den Antriebstrang vorgesehen. Der Antriebstrang kann beispielsweise durch einen Kettentrieb oder einen Zahntrieb gebildet werden.

Weiterhin sind im Bereich der Calcinatordüse 8 verschließbare Öffnungen 13, 14 vorgesehen, um eine ggf. erforderliche Inspektion oder Wartung vornehmen zu können. Außerdem besteht über diese Öffnungen die Möglichkeit, etwaige Ansatzbildungen zu entfernen. Der Ansatzbildung im Bereich der Elemente 9 kann aber auch durch turnusmäßiges Betätigen der Elemente 9 entgegengewirkt werden.

Die mit den heißen Abgasen 7 in Kontakt kommenden Elemente 9 werden gemäß einer bevorzugten Ausgestaltung gekühlt. Hierbei wird das Element 9 beispielsweise als Hohlkörper ausgebildet, wie das in Fig. 7 schematisch angedeutet ist. Die Zuführung eines Kühlmediums 17, beispielsweise Kühlluft oder Wasser, erfolgt zweckmäßigerweise über die Welle bzw. die Wellenzapfen 9.3. Durch Anordnung geeigneter Umlenkelemente 9.12 im Inneren des Elements 9 kann die Kühlwirkung erhöht werden. Das Kühlmedium kann dabei über den einen Wellenstummel 9.3 zugeführt und über den anderen Wellenstummel abgeführt. Denkbar ist ebenfalls eine einseitige Zu- und Abfuhr des Kühlmediums.

Die Elemente 9 bewirken nicht nur eine Veränderung der Abgasmenge, sondern ermöglichen auch eine gezielte Einstellung der Gasgeschwindigkeit im unteren Bereich der Calciniereinrichtung. Eine Erhöhung der Gasgeschwindigkeit ist beispielsweise bei der Verbrennung von stückigen Brennstoffen im Bereich des Calcinators wünschenswert.

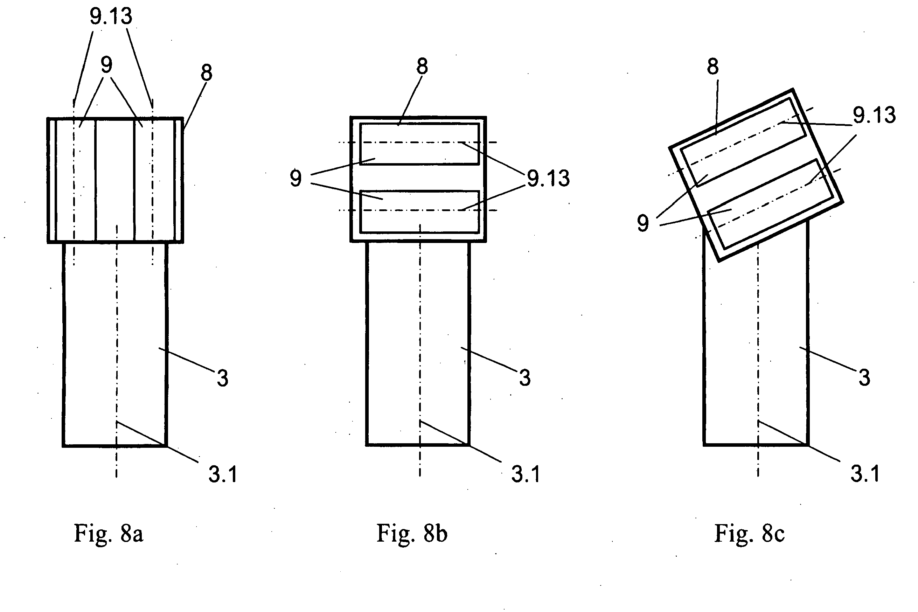

Die relative Anordnung der Elemente 9 zur Einstellung des Querschnitts der Calcinatordüse 8 zur Symmetrieachse 3.1 des Ofens ist in Fig. 8a - 8c dargestellt. Dabei muss die Symmetrieachse 3.1 nicht notwendigerweise mit den Drehachsen 9.13 der Elemente 9 fluchten, wie in Fig. 8a gezeigt, oder einen rechten Winkel aufzeigen, wie in Fig. 8b gezeigt. Die Anordnung der Elemente zur Einstellung des Querschnitts der Calcinatordüse kann auch anlagenspezifisch erfolgen.

Die Elemente 9 zur Einstellung des Querschnitts sind im Bereich einer Ausbuchtung des Calcinators angeordnet, wobei die Elemente 9 zur Vergrößerung der Calcinatordüse 8 zumindest teilweise in die Ausbuchtung dreh- bzw. schwenkbar ist.

Das oben beschriebene dreh- bzw. schwenkbare Element 9 zur Einstellung des Querschnitts der Calcinatordüse 8 zeichnet sich vor allem durch einen sehr einfachen Aufbau und eine einfache Abdichtung gegenüber der Umgebung aus. Das Element 9 lässt sich dadurch auch während des Betriebs der Calciniereinrichtung von außen verstellen. Über eine geeignete Steuereinrichtung kann die Stellung des Schiebers 15 zur Einstellung der Tertiärluftmenge und die Einstellung des Querschnitts der Calcinatordüse 8 automatisiert aufeinander abgestimmt werden, um so jederzeit auf sich ändernde Betriebsbedingungen zu reagieren.

## Patentansprüche

1. Anlage zur Herstellung von Zementklinker aus Zementrohmehl mit
a. einem Vorwärmer (1) zum Vorwärmen des Zementrohmehls,
b. einer Calciniereinrichtung (2) zum Vorcalcinieren des vorgewärmten Zementrohmehls,
c. einem Sinterbrennofen (3) zum Fertigbrennen des vorcalcinierten Zementrohmehls zu Zementklinker und
d. einem Kühler (4) zum Kühlen des gebrannten Zementklinkers,
e. wobei zwischen dem Kühler (4) und der Calciniereinrichtung (2) eine Tertiärluftleitung (5) vorgesehen ist, über welche der Calciniereinrichtung Tertiärluft (6) zugeführt wird und,
f. wobei die Calciniereinrichtung (2) von den Abgasen (7) des Sinterbrennofens (3) durchströmt wird und in ihrem Anfangsbereich eine Calcinatordüse (8) aufweist, und
g. ferner Mittel vorgesehen sind, um den Querschnitt der Calcinatordüse (8) einzustellen, die durch wenigstens ein Element (9) gebildet werden, das zur Einstellung des Querschnitts drehbar bzw. schwenkbar angeordnet und den Abgasen (7) des Sinterbrennofens (3) ausgesetzt ist,
**dadurch gekennzeichnet, dass** das wenigstens eine Element (9) zur Einstellung des Querschnitts im Bereich einer Ausbuchtung des Calcinators angeordnet ist, wobei das Element zur Vergrößerung der Calcinatordüse (8) zumindest teilweise in die Ausbuchtung dreh- bzw. schwenkbar ist.

2. Vorrichtung nach Anspruch 1, **dadurch gekennzeichnet, dass** das wenigstens eine Element (9) zur Einstellung des Querschnitts beidseitig gelagert ist.

3. Vorrichtung nach Anspruch 1, **dadurch gekennzeichnet, dass** zwei gegenüber liegend angeordnete Elemente (9) zur Einstellung des Querschnitts vorgesehen sind.

4. Vorrichtung nach Anspruch 1, **dadurch gekennzeichnet, dass** Mittel zur Kühlung des wenigstens einen Elements zur Einstellung des Querschnitts vorgesehen sind.

5. Vorrichtung nach Anspruch 1, **dadurch gekennzeichnet, dass** das wenigstens eine Element (9) zur Einstellung des Querschnitts durch ein Pendel (9.6) gebildet wird, das derart schwenkbar ist, dass es eine Veränderung des Querschnitts der Calcinatordüse (8) bewirkt.

6. Vorrichtung nach Anspruch 1, **dadurch gekennzeichnet, dass** das wenigstens eine Element (9) zur Einstellung des Querschnitts durch einen Zylinderausschnitt oder Zylinderabschnitt (9.5) gebildet wird, der derart drehbar ist, dass er eine Veränderung des Querschnitts der Calcinatordüse (8) bewirkt.

7. Vorrichtung nach Anspruch 1, **dadurch gekennzeichnet, dass** das wenigstens eine Element (9) zur Einstellung des Querschnitts durch eine segmentartige Scheibe (9.7) gebildet wird, die derart drehbar ist, dass sie eine Veränderung des Querschnitts der Calcinatordüse (8) bewirkt.

8. Vorrichtung nach Anspruch 1, **dadurch gekennzeichnet, dass** das wenigstens eine bewegliche (9) Element zur Einstellung des Querschnitts wärme- und verschleissgeschützt ist.

9. Vorrichtung nach Anspruch 1, **dadurch gekennzeichnet, dass** das wenigstens eine bewegliche Element (9) zur Einstellung des Querschnitts mit Mitteln zum Antreiben am Umfang ausgestattet sind.

## Claims

1. A system for producing cement clinker from raw cement meal, comprising
a. a preheater (1) for preheating the raw cement meal,
b. a calcining device (2) for precalcining the preheated raw cement meal,
c. a sintering furnace (3) for firing the precalcined raw cement meal to form cement clinker and
d. a cooler (4) for cooling the fired cement clinker,
e. wherein a tertiary-air line (5), via which tertiary air (6) is supplied to the calcining device, is provided between the cooler (4) and the calcining device (2), and
f. wherein the exhaust gases (7) from the sintering furnace (3) flow through the calcining device (2), which has a calcining nozzle (8) in its inlet region, and
g. means are also provided for adjusting the cross-section of the calcining nozzle (8) and are formed by at least one element (9) which, for adjustment of the cross-section, is/are rotatably or pivotably arranged and is/are exposed to the exhaust gases (7) from the sintering furnace (3),
**characterised in that** the at least one element (9) for adjusting the cross-section is/are arranged in the region of a convexity of the calciner, with the element being at least partially rotatable or pivotable into the convexity in order to increase the size of the calcining nozzle (8).

2. An apparatus according to claim 1, **characterised in that** the at least one element (9) for adjusting the cross-section is mounted on both sides.

3. An apparatus according to claim 1, **characterised in that** two elements (9) arranged opposite one another are provided for adjusting the cross-section.

4. An apparatus according to claim 1, **characterised in that** means are provided for cooling the at least one element for adjusting the cross-section.

5. An apparatus according to claim 1, **characterised in that** the at least one element (9) for adjusting the cross-section is/are formed by a pendulum (9.6) which is pivotable in such a way that it effects a change in the cross-section of the calcining nozzle (8).

6. An apparatus according to claim 1, **characterised in that** the at least one element (9) for adjusting the cross-section is/are formed by a cylinder section or cylinder portion (9.5) which is rotatable in such a way that it effects a change in the cross-section of the calcining nozzle (8).

7. An apparatus according to claim 1, **characterised in that** the at least one element (9) for adjusting the cross-section is/are formed by a segment-type plate (9.7) which is rotatable in such a way that it effects a change in the cross-section of the calcining nozzle (8).

8. An apparatus according to claim 1, **characterised in that** the at least one movable element (9) for adjusting the cross-section is/are protected against heat and wear.

9. An apparatus according to claim 1, **characterised in that** the at least one movable element (9) for adjusting the cross-section is/are provided with driving means on its circumference.

## Revendications

1. Installation pour la fabrication de clinker de ciment, avec
a. un préchauffeur (1) pour le préchauffage de la farine de ciment crue,
b. un dispositif de calcination (2) pour la pré-calcination de la farine de ciment crue préchauffée,
c. un four de frittage (3) pour finir la cuisson de la farine de ciment crue pré-calcinée en clinker de ciment,
d. un dispositif de refroidissement (4) pour le refroidissement du clinker de ciment cuit,
e. une conduite d'air tertiaire (5), par l'intermédiaire de laquelle de l'air tertiaire (6) est conduit au dispositif de calcination, étant prévue entre le dispositif de refroidissement (4) et le dispositif de calcination (2), et
f. le dispositif de calcination (2) étant traversé par les gaz d'échappement (7) du four de frittage (3) et présentant, dans sa zone d'entrée une buse de calcination (8), et
g. des moyens étant prévus pour le réglage de la section transversale de la buse de calcination (8), lesquels moyens sont formés par au moins un élément (9), qui est disposé, de manière à pouvoir tourner, respectivement pivoter pour le réglage de la section transversale, et est soumis aux gaz d'échappement (7) du four de frittage (3), **caractérisé en ce que** l'élément (9) au moins prévu est disposé dans la section d'un renflement du dispositif de calcination, pour le réglage de la section transversale, ledit élément pouvant tourner, respectivement pivoter, au moins partiellement, dans le renflement, pour l'élargissement de la buse de calcination (8).

2. Dispositif selon la revendication 1, **caractérisé en ce que** l'élément (9) au moins prévu est monté des deux côtés pour le réglage de la section transversale.

3. Dispositif selon la revendication 1, **caractérisé en ce que** deux éléments (9), disposés à l'opposé l'un de l'autre, sont prévus pour le réglage de la section transversale.

4. Dispositif selon la revendication 1, **caractérisée en ce que** des moyens sont prévus pour le refroidissement de l'élément au moins prévu pour le réglage de la section transversale.

5. Dispositif selon la revendication 1, **caractérisé en ce que** l'élément (9) au moins prévu pour le réglage de la section transversale est formé par un organe basculant (9.6), qui peut être pivoté de manière à provoquer une modification de la section transversale de la buse de calcination (8) .

6. Dispositif selon la revendication 1, **caractérisé en ce que** l'élément (9) au moins prévu pour le réglage de la section transversale est formé par une découpe de cylindre ou une section de cylindre (9.5), qui peut tourner de manière à provoquer une modification de la section transversale de la buse de calcination (8).

7. Dispositif selon la revendication 1, **caractérisé en ce que** l'élément (9) au moins prévu pour le réglage de la section transversale est formé par un segment de disque (9.7), qui peut tourner de manière à provoquer une modification de la section transversale de la buse de calcination (8).

8. Dispositif selon la revendication 1, **caractérisé en ce que** l'élément mobile (9) au moins prévu pour le réglage de la section transversale est protégé contre la chaleur et l'usure.

9. Dispositif selon la revendication 1, **caractérisé en ce que** l'élément mobile (9) au moins prévu pour le réglage de la section transversale est équipé de moyens d'entraînement périphérique.
